# EUROPEAN PATENT SPECIFICATION

(11) **EP 4 253 157 B1**
(45) Date of publication and mention of the grant of the patent: **07.05.2025**
(21) Application number: 23165168.8
(22) Date of filing: 29.03.2023
(51) Int. Cl.: B60R 13/02

(54) **COVER ASSEMBLY FOR FIXING A COVER MEMBER TO A DASHBOARD OF A VEHICLE**
ABDECKUNGSANORDNUNG ZUR BEFESTIGUNG EINES ABDECKUNGSELEMENTS AN EINEM ARMATURENBRETT EINES FAHRZEUGS
ENSEMBLE COUVERCLE POUR FIXER UN ÉLÉMENT COUVERCLE À UN TABLEAU DE BORD D'UN VÉHICULE

(30) Priority: 29.03.2022 IN 202221018412
(43) Date of publication of application: 04.10.2023
(73) Proprietor: Faurecia India Private Limited, Bhosari, Pune 411026 (IN)
(72) Inventor: DALAVI, Sandeep, 412105 Pune, Maharashtra (IN); DUBHASHI, Vinit, 411018 Pune, Maharashtra (IN)
(74) Representative: Pfenning, Meinig & Partner mbB

(56) References cited:
- DE-B3- 102006 020 697
- FR-A1- 2 894 304
- US-A1- 2012 073 089
- US-A1- 2021 348 636

## Description

### TECHNICAL FIELD

The present disclosure relates to the field of cover panels or trim panels used in vehicles. More particularly, the present disclosure relates to a simple and cost-effective cover assembly for fixing a cover member to an interior trim part like a dashboard or a console of a vehicle, which prevents detachment of the cover member with the interior trim panel during an event of collision/impact of the vehicle.

### BACKGROUND

Background description includes information that may be useful in understanding the present invention. It is not an admission that any of the information provided herein is prior art or relevant to the presently claimed invention, or that any publication specifically or implicitly referenced is prior art.

Vehicles are, generally, provided with trim panels such as decorative panels, cover members, door trim panels, and the like, in an interior of the vehicle to cover components such as sensors, motors, cameras, wirings, etc. to protect it and also to beautify the vehicle interior. These decorative panels or cover members are generally provided on an interior trim part like an armrest, a door panel, a dashboard, a roof, etc. of the vehicle interior. These cover members and/or trim panels are fixed to the corresponding trim part(s) / body part(s) of the vehicle using fasteners, such as clips, hooks, etc. Such fasteners allow ease of assembly of the decorative panels or the cover members to the body part of the vehicle and also allow disassembly of the panels if required. Detachment or ejection of the decorative panels, cover members, trim panels, and/or other interior parts of the vehicle is undesirable during a collision of the vehicle as it may detach and fly in the passenger compartment. However, upon application of impact forces during the collision of the vehicle, these cover members and/or decorative panels may detach from the trim part(s) / body part(s), which is highly undesirable.

US 2012/073089 A1 discloses a fastener for a body part of a vehicle, the fastener comprising: a shank designed to be throughly accommodated in use with a slot of the body part; a hammer-like head which overhangingly extends from both sides of the shank, perpendicularly to a symmetric axis of the shank; and an elastically deformable, suction-cap-shaped flange carried by the shank on the side opposite to the head, distanced therefrom; the shank carrying two elastically deformable oblique arms, which overhangingly extend from both sides of the shank, in a direction perpendicular to the head and so as to reciprocally move away from each other towards the flange, dimensioned so as to elastically cooperate against the shank when the head is introduced through the slot, and then stretch to snappingly engage the slot when the head is rotated.

**In** order to keep the cover member fixed to the interior trim part/body part and to avoid detachment of the cover member of the existing cover assembly during the collision of the vehicle, a large number of fastening tools including screws and hooks are required, which would make the overall assembly bulky, cumbersome and as well as costly.

There is, therefore, a need to overcome the above drawbacks, limitations, and shortcomings and provide a simple, robust, improved, and aesthetically pleasing cover assembly for vehicle interior, which can be easily implemented in the vehicle interior, and which prevents detachment of the cover member during the collision of the vehicle.

This is achieved by a cover assembly with the features of independent claim 1. Further advantageous embodiments are shown in the dependent claims as well as in the description and the figures.

### OBJECTS OF THE PRESENT DISCLOSURE

Some of the objects of the present disclosure, which at least one embodiment herein satisfies are as listed herein below.

It is an object of the present disclosure to provide an improved and cost-effective mounting device for fixing and/or securing a cover member to an interior trim part like a dashboard or a console or a door panel of a vehicle such that during an event of collision/impact of the vehicle the mounting device prevents the detachment of the cover member from the interior trim part.

It is an object of the present disclosure to provide a simple and easy to implement, and robust mounting device for ease of mounting a cover member or decorative panel on an interior trim part like a dashboard or a console or a door panel of a vehicle, which prevents detachment of the cover member or decorative panel from the interior trim part during an event of collision of the vehicle.

It is an object of the present disclosure to provide a simple, and aesthetically pleasing cover assembly for a vehicle interior, which can be easily mounted on an interior trim part or body part, such as a dashboard/console/door, etc. and prevents separation and flying of a cover member when an external impact force is applied during a collision such as a rear/side/front collision and/or a bump collision of the vehicle.

It is an object of the present disclosure to provide an improved cover assembly for a vehicle interior, which prevents a cover member or a decorative panel from being detached from an interior trim part or a body part of a vehicle and flies off during an event of collision of the vehicle.

It is an object of the present disclosure to provide a cover assembly with a mounting device with sufficient arrangement to prevent detachment and flying off of a cover member of the cover assembly in case other hooks or metal clips of the assembly fails that unhooked/unclipped from the interior trim part or body part of the vehicle.

It is an object of the present disclosure to provide an improved cover assembly for a vehicle interior, which can be easily assembled on a trim part / a body part such as a dashboard or a console without any major modification and can also be disassembled or removed with ease.

### SUMMARY

The present disclosure relates to the field of trim panels or cover members used in vehicles. More particularly, the present disclosure relates to an improved, simple, and aesthetically pleasing cover assembly for a body panel, such as a dashboard or a console, or a door, of a vehicle, for fixing a cover member on the body panel. The proposed cover assembly prevents detachment and flying of the cover member during an event of collision of the vehicle.

An aspect of the present disclosure pertains to a mounting device for preventing detachment of a cover member from a panel, such as a dashboard or a console, during an event of collision/impact of a vehicle. The mounting device is configured to prevent detachment and/or separation of the cover member from the panel when impact forces are exerted on the cover member and/or the panel during the collision of the vehicle, thereby preventing the flying of the cover member in a passenger compartment of the vehicle during the collision of the vehicle. The mounting device can include a connecting link coupled to or extended from an inner surface of the cover member and extending downward, and one or more first protrusion coupled to or extended from respective first side face of a free end portion of the connecting link. The one or more first protrusion is extended substantially perpendicularly or obliquely from the respective first side face of the free end portion of the connecting link. The mounting device can further include one or more second protrusion coupled to or extended from a second side face of the free end portion of the connecting link such that the one or more second protrusion is extended a direction substantially perpendicularly or obliquely from the free end portion of the connecting link and the one or more of first protrusion.

The connecting link, the one or more first protrusion, and the one or more second protrusion are adapted to be received in a slot provided on the panel such that at least one of the one or more first protrusion and the one or more second protrusion is abutted with the panel for fixing and/or securing the cover member with the panel such that it prevents detachment of the cover member with the panel during an event of collision/impact of the vehicle. The collision can be a rear collision or a frontal collision or a side collision of the vehicle.

The one or more first protrusion can include a pair of the first protrusions are extending in opposite directions to each other from the respective first side faces and the one or more second protrusion can include a pair of the second protrusions. The pair of second protrusions are configured spaced apart and extended in the same direction. The first protrusions and the second protrusions are adapted to be received in the slot of the panel. The panel can be an interior trim part like a dashboard or a console or a door panel of the vehicle.

In addition, the slot of the panel can be plus-shaped. A portion, for instance, a front portion, of the slot can be arranged on an at least partially inclined surface of the panel. The inclined portion of the slot can be inclined with the adjacent portion of the slot and allowing ease of inserting the connecting link with the first protrusions and the second protrusions in the slot. In addition, the inclined front portion of the slot can allow insertion of the connecting link with the one or more first protrusion and the one or more second protrusion in the slot without tiling the cover member at a high angular position with respect to the panel, thereby facilitating ease of assembly of the cover member on the panel.

The slot of the panel can include an insertion region having a width such that the connecting link with the one or more first protrusion can be received through the insertion region. For instance, the width of the insertion region can be substantially equal to a width of the one or more first protrusion. In addition, the slot can include one or more holding region adjacent to the insertion region and extended in a direction opposite to the insertion region. The holding region can have a width such that at least one of the one or more first protrusion and the one or more second protrusion can be abutted/engaged with the panel in a corresponding portion adjacent to the holding region in case of collision/impact of the vehicle to prevent detachment of the cover member. The width of each holding region can be less than the width of the insertion region. In addition, the width of each holding region can be equal to the width of the free end portion of the connecting link.

The present disclosure provides a cover assembly for an interior of a vehicle. The proposed cover assembly can include a cover member having one or more mounting device, and a panel/interior trim part comprising one or more slot to receive a portion of the one or more mounting device to fix and/or secure the cover member with the panel/ interior trim part such that during an event of collision/impact of the vehicle the mounting device prevents the detachment of the cover member from the panel. Further, the cover member of the cover assembly can include a L-shaped hook/clipping element, like a snap-fit adapted to be hooked or clipped to the panel. In an embodiment, the panel can be a dashboard or a console or a door of the vehicle. Each mounting device can include a connecting link coupled to or extended from the cover member and extending downward, and one or more first protrusion coupled to or extended from respective first side face of a free end portion of the connecting link. The one or more first protrusion can be extended substantially perpendicularly or obliquely from the free end portion of the connecting link. Each mounting device can further include one or more second protrusion coupled to or extended from a second side face of the free end portion of the connecting link such that the one or more second protrusion can be extended perpendicularly from the free end portion of the connecting link and the one or more first protrusion. For instance, the one or more first protrusion can include a pair of the first protrusions extending in opposite directions to each other, and the one or more second protrusion can include a pair of the second protrusions. The pair of second protrusions are configured spaced apart and extended in the same direction. The first protrusions and the second protrusions are adapted to be received in the slot of the panel. The panel can be an interior trim part like a dashboard or a console or a door of a vehicle.

The connecting link, the one or more first protrusion, and the one or more second protrusion of each mounting device are adapted to be received in the corresponding one or more slot of the panel such that at least one of the one or more first protrusion and the one or more second protrusion is abutted with an inner surface of the panel to prevent detachment of the cover member with the panel during an event of collision/impact of the vehicle. In addition, the abutment of the one or more first protrusions and/or the one or more second protrusion with the inner surface of the panel can prevent detachment and fly of the cover member in case other hooks or metal clips of the assembly fails due to exertion of impact forces on the body panel and/or cover member during the collision of the vehicle.

In addition, the panel can include a chamfered portion towards a front portion of each slot such that the front portion of the slot is inclined with the adjacent portion of the slot. The inclined front end of the slot can allow ease of inserting the connecting link with the first protrusions and the second protrusions in the slot. In addition, the inclination of the slot at the front end of the slot can allow insertion of the connecting link with the first protrusions and the second protrusions in the slot without tiling the cover member at a high angular position with respect to the panel. Each slot is plus-shaped.

Further, each slot of the panel can include an insertion region and one or more holding region. The insertion region can have a width such that the connecting link with the first protrusions are received through the insertion region. The holding region can have a width such that any or both of the first protrusions and the second protrusions can be abutted/engaged with the panel in a corresponding portion adjacent to the holding region to prevent detachment of the cover member from the panel during the event of collision/impact of the vehicle.

### BRIEF DESCRIPTION OF DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure. The diagrams are for illustration only, which thus is not a limitation of the present disclosure.

In the figures, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1 illustrates a cross-sectional side view of the proposed cover assembly for an interior of a vehicle, in accordance with an embodiment of the present invention.
FIG. 2A illustrates an exploded view of the proposed cover assembly showing a mounting device of a cover member and a slot in a panel of the cover assembly, and FIG. 2B illustrates the proposed cover assembly in an event of collision/impact condition in which the mounting device is abutted with the panel, in accordance with embodiments of the present invention.

### DETAILED DESCRIPTION

The following is a detailed description of embodiments of the disclosure depicted in the accompanying drawings.

Embodiments of the present disclosure relate to an improved, simple, robust, and cost-effective mounting device for fixing and/or securing a cover member to an interior trim part in an interior of a vehicle such that during an event of collision/impact of the vehicle the mounting device prevents the detachment of the cover member from an interior trim part. More particularly, the present disclosure relates to an improved, simple, and aesthetically pleasing cover assembly for a body panel, such as a dashboard, of a vehicle, for fixing a cover member on the body panel. The proposed cover assembly prevents the cover member from being detached and flying off during an event of collision of the vehicle.

According to an embodiment, the proposed cover assembly can include a cover member having one or more mounting device, and a panel including one or more slot to receive a portion of the one or more mounting device to enable fixing and/or securing of the cover member with the panel. In an embodiment, the panel is an interior trim part like a dashboard or a console of the vehicle. Further, the cover member of the cover assembly can include a hooking member, or a snap-fit adapted to be hooked or clipped to the panel.

Each mounting device can include a connecting link coupled to or extended from the cover member, and one or more of first protrusion coupled to or extended from respective first side face of a free end portion of the connecting link. The one or more of first protrusion can include a pair of first protrusions extended substantially perpendicularly or obliquely from the free end portion of the connecting link in opposite directions. Each mounting device can further include one or more second protrusion coupled to or extended from a second side face of the free end portion of the connecting link such that the one or more second protrusion can be extended substantially perpendicularly or obliquely from the free end portion of the connecting link and the one or more first protrusion. More particularly, in an embodiment, the second side face of the connecting link can be/is a surface extending substantially perpendicular or obliquely from a surface of the first side face of the connecting link. For instance, the one or more second protrusion can include a pair of protrusions which are configured spaced apart and extended in the same direction.

The connecting link, the one or more first protrusion, and the one or more second protrusion of the mounting device are adapted to be inserted in the corresponding slot of the panel such that at least one of the one or more first protrusion and the one or more second protrusion are abutted/engaged with the panel to prevent detachment of the cover member with the panel during an event of collision/impact of the vehicle. In addition, the abutment/engagement of the one or more first protrusion and/or the one or more second protrusion with the panel can prevent the cover member from being flying off in case other hooks or metal clips of the cover assembly fails due to the exertion of impact forces on the body panel and/or the cover member during the collision of the vehicle. For instance, the collision can be a frontal collision or a rear collision of the vehicle.

In addition, the panel can include a chamfered portion towards a front portion of the slot such that the front portion of the slot is inclined with the adjacent portion of the slot. The inclined front end of the slot can allow ease of inserting the connecting link with the first protrusions and the second protrusions in the slot. In addition, the inclined front end of the slot can allow insertion of the connecting link with the first protrusions and the second protrusions in the slot without tiling the cover member at a high angular position with respect to the panel. For instance, each slot can be a plus-shaped slot.

Further, each slot of the panel can include an insertion region and one or more holding region. The insertion region can have a width such that the connecting link with the one or more first protrusion can be received through the insertion region. For instance, the width of the insertion region can be substantially equal to a width of the one or more first protrusion. This restrains coming out of the first protrusions from the slot during the event of collision/impact of the vehicle. In addition, the holding region can be configured adjacent to the insertion region and extended in directions opposite to the insertion region. The holding region can have a width such that any or both of the one or more first protrusion and the one or more second protrusion can be abutted/engaged with the panel in a corresponding portion adjacent to the holding region during the event of collision/impact of the vehicle. The width of the holding region can be less than the width of the insertion region.

It is to be appreciated that while various embodiments have been explained herein with reference to a cover assembly for fixing a cover member to a dashboard of a vehicle through a mounting device and a slot, the concept of the present disclosure can be applied for fixing or mounting other trim panels, such as door trim panels, decorative panels, etc. in the vehicle interior, and all such applications are well within the scope of the present disclosure without any limitations whatsoever.

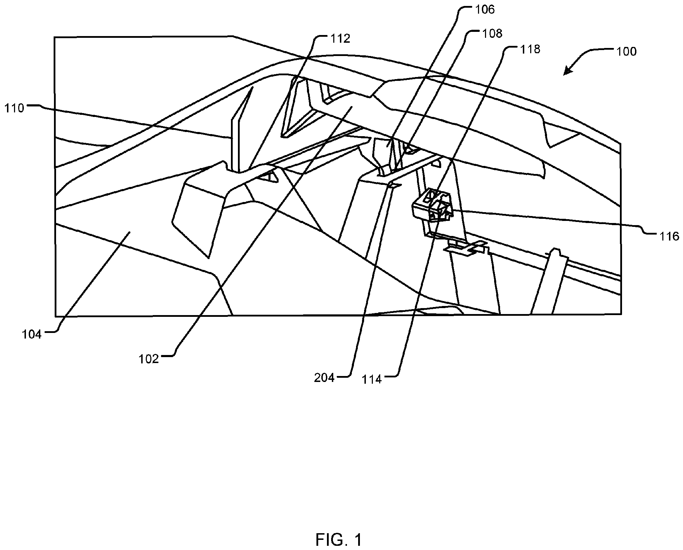

Referring to FIG. 1 where an exemplary sectional view of the proposed cover assembly 100 for an interior of a vehicle is shown. In an embodiment, the proposed cover assembly 100 can include a cover member 102 removably configured with a panel 104, such as a dashboard, of the vehicle as shown in FIG. 1. The cover member 102 can be configured to partially cover any or combination of, but not limited to, sensors and cameras configured in the panel/dashboard 104 of the vehicle for beautifying the vehicle interior. The cover member 102 can include a mounting device 106 for fixing and/or securing the cover member 102 to the panel 104 in case of collision/impact of the vehicle. The panel 104 is provided with a slot 108 to receive a portion of the mounting device 106 to enable fixing and/or securing of the cover member 102 with the panel 104. Engagement of the mounting device 106 of the cover member 102 with the slot 108 of the panel 104 keeps the cover member 102 in place and avoid detachment and flying of the cover member 102 even when an impact force is exerted on the cover member 102 and/or the panel 104 during the event of collision of the vehicle.

In addition, the cover assembly 100 can include a L-shaped hook/locator 110 provided with the cover member 102 for engagement with the L-shaped slot 112 in the panel 104. The cover assembly 100 can also include a clipping element 114 including a metal snap-fit portion 118 provided with the cover member 102 for clipping with an opening 116 in the panel 104.

In addition, the mounting device 106 can be configured to prevent detachment and flying of the cover member 102 in case the L-shaped hook 110 and the clipping element 114, of the cover assembly 100, are failed or damaged due to exertion of the impact forces on the panel 104 and/or the cover member 102 during the collision of the vehicle. For instance, the collision can be any of a frontal collision and a rear collision of the vehicle.

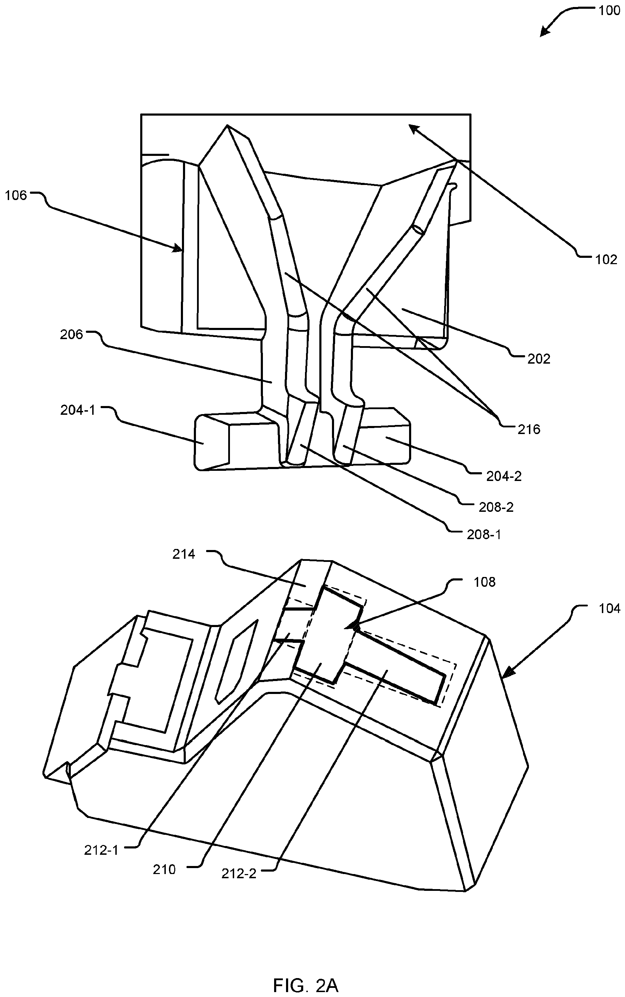

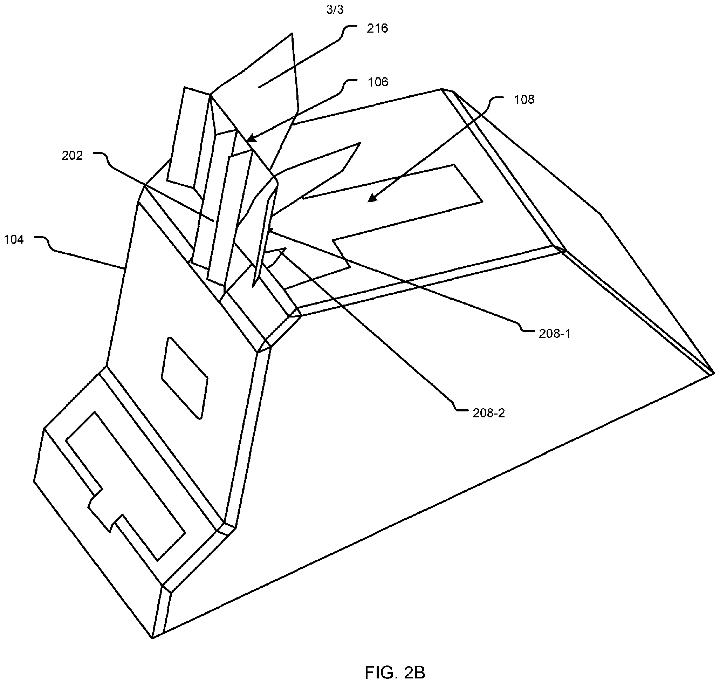

Referring to FIG. 2A and 2B, in an embodiment, the mounting device 106 can be configured to prevent detachment of the cover member 102 from the panel 104 during the frontal collision and/or the rear collision of the vehicle, thereby preventing the cover member 102 from being flying off in a passenger compartment of the vehicle during the collision of the vehicle. The mounting device 106 can include a connecting link 202 coupled to or extended from an inner surface of the cover member 102 and extending vertically downward, and a pair of first protrusions 204-1 and 204-2 (hereinafter, collectively referred to as first protrusions 204, and individually referred to as first protrusion 204). The first protrusions 204 can be coupled to or extended from two opposite first side faces of a free end portion 206 of the connecting link 202. The free end portion 206 of the connecting link 202 is free end side surfaces, for example in the FIG. 2A, the connecting link 202 has a square/rectangular shape having four numbers of free end side surfaces. The first protrusions 204 can be extended substantially perpendicularly from the respective first side faces of the free end portion 206 of the connecting link 202 in opposite directions. In another embodiment, the first protrusions 204 can be coupled to or extended from the respective first side faces of the connecting link 202 at a certain angle such that the first protrusions 204 can be inclined with the respective first side faces of the connecting link 202. For instance, the angle between the first protrusions 204 and the respective first side faces of the connecting link 202 can be in a range of 40 to 80 degrees.

The mounting device 106 can further include a pair of second protrusions 208-1 and 208-2 (hereinafter, collectively referred to as second protrusions 208, and individually referred to as second protrusion 208). The second protrusions 208 are coupled to or extended from a second side face, of the free end portion 206 of the connecting link 202. The second protrusions can be extended in a direction substantially perpendicularly from the free end portion 206 of the connecting link 202 and the first protrusions 204. In another embodiment, the second protrusions 208 can be coupled to or extended from the second side face of the connecting link 202 at a certain angle such that the second protrusions 208 can be inclined with the second side faces of the connecting link 202. For instance, the angle between the second protrusions 204 and the respective second side faces of the connecting link 202 can be in a range of 50 to 90 degrees. In addition, as shown in FIG. 2A, the second side face can a side surface of the free end portion 206 facing in a direction perpendicular to the first side surfaces of the free end portion 206.

The second protrusions 208 can be configured spaced apart and extended in the same direction. In addition, the second protrusions 208 can also avoid the breakage of the mounting device 106 specifically at a junction of the first protrusions 204 and the second protrusions 208 during an event of the collision of the vehicle. For instance, the mounting device 106 can be rigid enough to sustain the impact forces, for example during the event of the vehicle collision. In an embodiment, the mounting device 106 can be integral to the cover member 102. In an embodiment, the connecting link 106, the first protrusions 204, and the second protrusions 208 of the mounting device 106 and the cover member 102 are integral parts. For instance, the mounting device 106 can be molded along with the cover member 102 in a main tool without addition of any slider or any extra cost, thereby minimizing manufacturing cost of the cover assembly 100.

In an exemplary embodiment, a shape of each first protrusion 204 can be rectangular. In another embodiment, the first protrusions 204 can be of any other suitable shape, such as but not limited to conical, circular, triangular, and the like.

In an exemplary embodiment, a shape of each second protrusion 208 can be triangular. In another embodiment, the second protrusions 208 can be of any other suitable shape, such as but not limited to conical, circular, rectangular, and the like.

The slot 108 in the panel 104 is a plus-shaped slot. The slot 108 can be configured to receive the connecting link 202, the first protrusions 204, and the second protrusions 208 of the mounting device 106. The slot 108 can include an insertion region 210 (show by a dotted rectangle) and a holding region, including a front holding region 212-1 and a rear holding region 212-2, (hereinafter, collectively referred to as holding regions 212). The holding region 212 (show by dotted rectangles) can be configured on opposite sides of the insertion region 210 and extended in a direction opposite to the insertion region 210. The insertion region 210 can have a width such that the connecting link 202 along with the first protrusions 204 can be inserted through the insertion region 210. For instance, the width of the insertion region 210 can be equal to the width of the first protrusions 204.

In an implementation, for assembling the covering member 102 on the panel 104, first, the connecting link 202 and the first protrusions 204 can be inserted through the insertion region 210, and the second protrusions 208 can be inserted through the front or rear holding region 212-1 and 212-2 of the slot 108. Secondly, the cover member 102 is moved into the holding region 212 until the L-hook 110 and/or the clipping element 114 is clipped on a respective L-shaped slot 112 and/or the opening 116 of the panel 104.

Further, the holding region 212 can have a width such that any or both of the first protrusions 204 can be held therein when the cover member 102 is displaced with respect to the panel 104, thereby preventing detachment of the cover member 102 from the panel 104. In addition, the width of each of the holding regions 212 can equal to a width of a free end portion 206 of the connecting link 202. In addition, any or both of the first protrusions 204 and the second protrusions 208 can abut with an inner surface of the panel 104 in a portion adjacent to the holding region 212 during an event of collision of the vehicle, thereby fixing and/or securing the cover member 102 with the panel 104.

In an implementation, during the collision of the vehicle and when the L-hook 110 and/or the clipping element 114 of the cover member 102 fail or damage thus, the connecting link 202 moves into the slot 108, i.e., along the holding region 212, any or both the first protrusions 204 and the second protrusions 208 can abut with the inner surface of the panel 104 in the portion adjacent to the holding region 212 to fix and/or secure the cover member 102 with the panel 104, thereby avoiding detachment and flying off the cover member 102.

The abutment of any or both of the first protrusions 204 and the second protrusions 208 with the inner surface of the panel 104 avoids detachment and flying of the cover member 102 even when high impact forces are exerted on the cover member 102 and/or the panel 104 during the event of collision of the vehicle. In addition, the abutment of any or both of the first protrusions 204 and the second protrusions 208 with the inner surface of the panel 104 avoid detachment and flying of the cover member 102 in the frontal collision as well as the rear collision of the vehicle.

Furthermore, the panel 104 can include a chamfered portion 214 towards the front portion of the slot 108 such that the front portion, i.e., the front the holding region 212-1, of the slot 108 can be inclined with the adjacent portion, i.e., the insertion region 210, of the slot 108. The inclined front end of the slot 108 can allow ease of inserting the connecting link 202 with the first protrusions 204 and the second protrusions 208 in the slot 108. In addition, the inclined front end of the slot 108 can allow insertion of the connecting link 202 with the first protrusions 204 and the second protrusions 208 in the slot 108 without tiling the cover member 108 at a high angular position with respect to the panel 104, thereby facilitating ease of assembly of the cover member 102. Therefore, the mounting device 106 of the cover assembly 100 secures the cover member 102 to the panel/dashboard 104 in the event of the vehicle collision, wherein the force applied to the cover member 102 during the collision, displaces the cover member 102 with respect to the panel 104, is used in order to bring the connecting link 202 into one of the holding regions 212 of the slot 108 of the panel 102 in which the any or both of the first protrusions 204 and the second protrusions 208 are securely held.

In addition, the mounting device 106 can include ribs 216 coupled to or extended from the connecting link 202 to strengthen the connecting link 202.

While the foregoing describes various embodiments of the invention, other and further embodiments of the invention may be devised without departing from the basic scope thereof. The scope of the invention is determined by the claims that follow. The invention is not limited to the described embodiments, versions or examples, which are included to enable a person having ordinary skill in the art to make and use the invention when combined with information and knowledge available to the person having ordinary skill in the art.

### ADVANTAGES OF THE INVENTION

The proposed invention provides an improved and cost-effective mounting device for fixing a cover member to an interior trim part like a dashboard or a console or a door panel of a vehicle.

The proposed invention provides a simple and easy to implement, and robust mounting device for ease of mounting a cover member or decorative panel on an interior trim part like a dashboard or a console or a door panel of a vehicle, which prevents detachment of the cover member or decorative panel from the interior trim part during an event of collision of the vehicle.

The proposed invention provides a simple, and aesthetically pleasing cover assembly for a vehicle interior, which can be easily mounted on an interior trim part or body part, such as a dashboard/console/door etc., and prevents separation and flying of a cover member when an external impact force is applied during a collision such as a rear/side/front collision and/or a bump collision of the vehicle.

The proposed invention provides an improved cover assembly for a vehicle interior, which prevents a cover member or a decorative panel from being detached from an interior trim part or a body part of a vehicle and flies off during an event of collision of the vehicle.

The proposed invention provides a cover assembly with a mounting device with sufficient arrangement to prevent detachment and flying off of a cover member of the cover assembly in case other hooks or metal clips of the assembly fails or damage and thus unhooked/unclipped from the interior trim part or body part of the vehicle in case of collision/impact of the vehicle.

The proposed invention provides an improved cover assembly for a vehicle interior, which can be easily assembled on a trim part / a body part such as a dashboard or a console without any major modification and can also be disassembled or removed with ease.

## Claims

1. A cover assembly (100) for an interior of a vehicle, the cover assembly (100) comprising:
a cover member (102) comprising one or more mounting device (106); and
a panel (104) comprising one or more slot (108) to receive a portion of the one or more mounting device (106) to enable fixing of the cover member (102) with the panel (104);
wherein each mounting device (106) comprises:
a connecting link (202) coupled to or extended from the cover member (102);
one or more first protrusion (204) coupled to or extended from respective first side face of a free end portion (206) of the connecting link (202), the one or more first protrusion (204) being extended substantially perpendicularly or obliquely from the free end portion (206) of the connecting link (202); and
one or more second protrusion (208) coupled to or extended from a second side face of the free end portion (206) of the connecting link (202) such that the one or more second protrusion (208) is extended in a direction substantially perpendicularly or oblique from the free end portion (206) of the connecting link (202) and the one or more first protrusion (204),
wherein the connecting link (202), the one or more first protrusion (204), and the one or more second protrusion (208) are adapted to be received in the corresponding one or more slot (108) of the panel (104) such that at least one of the one or more first protrusion (204) and the one or more second protrusion (208) is abutted with the panel (104) for preventing the detachment of the cover member (102) from the panel (104) during an event of collision/impact of the vehicle, **characterized in that**
each of the one or more slot (108) of the panel (104) is a plus-shaped slot.

2. The cover assembly (100) as claimed in claim 1, wherein the one or more first protrusion (204) comprises a pair of first protrusions (204-1, 204-2) extending opposite to each other, wherein the one or more second protrusion (208) comprises a pair of the second protrusions (208) extending in a same direction and are spaced apart, and wherein the panel (104) is a dashboard or a console of the vehicle.

3. The cover assembly (100) as claimed in claim 1, wherein the panel (104) comprises a chamfered portion (214) towards a front portion of each slot (108) such that the front portion of the slot (108) is inclined with the adjacent portion of the slot (108).

4. The cover assembly (100) as claimed in claim 1, wherein each slot (108) of the panel (104) comprises an insertion region (210) having a width such that the connecting link (202) with the one or more first protrusion (204) are received through the insertion region (210); and wherein each slot (108) of the panel (104) comprises one or more holding region (212), each of the one or more holding region (212) having a width such that at least one of the one or more first protrusion (204) and the one or more second protrusion (208) is abutted with the panel (104) in a corresponding portion adjacent to the holding region (112) in the event of collision/impact of the vehicle to prevent detachment of the cover member (102) from the panel (104).

## Patentansprüche

1. Abdeckungsanordnung (100) für den Innenraum eines Fahrzeugs, wobei die Abdeckungsanordnung (100) umfasst:
ein Abdeckungselement (102), das eine oder mehrere Montagevorrichtungen (106) umfasst; und
ein Paneel (104) mit einem oder mehreren Schlitzen (108) zur Aufnahme eines Abschnitts der einen oder mehreren Montagevorrichtungen (106), um die Befestigung des Abdeckungselements (102) an dem Paneel (104) zu ermöglichen;
wobei jede Montagevorrichtung (106) umfasst:
ein Verbindungsglied (202), das mit dem Abdeckungselement (102) gekoppelt ist oder sich von diesem erstreckt;
einen oder mehrere erste Vorsprünge (204), die mit einer jeweiligen ersten Seitenfläche eines freien Endabschnitts (206) des Verbindungsglieds (202) verbunden sind oder sich von dieser erstrecken, wobei der eine oder die mehreren ersten Vorsprünge (204) sich im Wesentlichen senkrecht oder schräg von dem freien Endabschnitt (206) des Verbindungsglieds (202) erstrecken; und
einen oder mehrere zweite Vorsprünge (208), die mit einer jeweiligen zweiten Seitenfläche des freien Endabschnitts (206) des Verbindungsglieds (202) verbunden sind oder sich von dieser erstrecken, so dass der eine oder die mehreren zweiten Vorsprünge (208) sich in einer Richtung erstrecken, die im Wesentlichen senkrecht oder schräg zu dem freien Endabschnitt (206) des Verbindungsglieds (202) und dem einen oder den mehreren ersten Vorsprüngen (204) ist,
wobei das Verbindungsglied (202), der eine oder die mehreren erste Vorsprünge (204) und der eine oder die mehreren zweite Vorsprünge (208) so angepasst sind, dass sie in dem bzw. den entsprechenden einen oder mehreren Schlitzen (108) des Paneels (104) aufgenommen werden können, so dass mindestens einer von dem einen oder den mehreren ersten Vorsprüngen (204) und dem einen oder den mehreren zweiten Vorsprüngen (208) an dem Paneel (104) anliegt, um das Lösen des Abdeckungselements (102) von dem Paneel (104) während eines Kollisions-/Aufprallereignisses des Fahrzeugs zu verhindern, **dadurch gekennzeichnet, dass**
jeder des einen oder der mehreren Schlitze (108) des Paneels (104) ein plusförmiger Schlitz ist.

2. Abdeckungsanordnung (100) nach Anspruch 1, wobei der eine oder die mehreren ersten Vorsprünge (204) ein Paar erster Vorsprünge (204-1, 204-2) umfassen, die sich gegenüberliegend zueinander erstrecken, wobei der eine oder die mehreren zweiten Vorsprünge (208) ein Paar der zweiten Vorsprünge (208) umfassen, die sich in die gleiche Richtung erstrecken und voneinander beabstandet sind, und wobei das Paneel (104) ein Armaturenbrett oder eine Konsole des Fahrzeugs ist.

3. Abdeckungsanordnung (100) nach Anspruch 1, wobei das Paneel (104) einen abgeschrägten Abschnitt (214) zu einem vorderen Abschnitt jedes Schlitzes (108) hin umfasst, so dass der vordere Abschnitt des Schlitzes (108) mit dem benachbarten Abschnitt des Schlitzes (108) geneigt ist.

4. Abdeckungsanordnung (100) nach Anspruch 1, wobei jeder Schlitz (108) des Paneels (104) einen Einführungsbereich (210) mit einer solchen Breite aufweist, dass das Verbindungsglied (202) mit dem einen oder den mehreren ersten Vorsprüngen (204) durch den Einführungsbereich (210) aufgenommen wird; und wobei jeder Schlitz (108) des Paneels (104) einen oder mehrere Haltebereiche (212) umfasst, wobei jeder des einen oder der mehreren Haltebereiche (212) eine solche Breite aufweist, dass mindestens einer von dem einen oder den mehreren ersten Vorsprüngen (204) und dem einen oder den mehreren zweiten Vorsprüngen (208) im Falle eines Kollisions-/Aufprallereignisses des Fahrzeugs an das Paneel (104) in einem entsprechenden Abschnitt angrenzend an den Haltebereich (112) anstößt, um ein Lösen des Abdeckelements (102) von dem Paneel (104) zu verhindern.

## Revendications

1. Ensemble de recouvrement (100) pour un intérieur d'un véhicule, l'ensemble de recouvrement (100) comprenant :
un élément de recouvrement (102) comprenant un ou plusieurs dispositifs de montage (106) ; et
un panneau (104) comprenant une ou plusieurs fentes (108) pour recevoir une partie des un ou plusieurs dispositifs de montage (106) pour permettre la fixation de l'élément de recouvrement (102) avec le panneau (104) ;
dans lequel chaque dispositif de montage (106) comprend :
une pièce de liaison de connexion (202) couplée à l'élément de recouvrement (102) ou étendue depuis celui-ci ;
une ou plusieurs premières protubérances (204) couplées à une première face latérale respective d'une partie d'extrémité libre (206) de la pièce de liaison de connexion (202) ou étendues depuis celle-ci, les une ou plusieurs premières protubérances (204) étant étendues sensiblement perpendiculairement ou à l'oblique par rapport à la partie d'extrémité libre (206) de la pièce de liaison de connexion (202) ; et
une ou plusieurs secondes protubérances (208) couplées à une seconde face latérale de la partie d'extrémité libre (206) de la pièce de liaison de connexion (202) ou étendues depuis celle-ci de telle sorte que les une ou plusieurs secondes protubérances (208) soient étendues dans une direction sensiblement perpendiculaire ou à l'oblique par rapport à la partie d'extrémité libre (206) de la pièce de liaison de connexion (202) et par rapport aux une ou plusieurs premières protubérances (204),
dans lequel la pièce de liaison de connexion (202), les une ou plusieurs premières protubérances (204) et les une ou plusieurs secondes protubérances (208) sont adaptées pour être reçues dans les une ou plusieurs fentes correspondantes (108) du panneau (104) de telle sorte qu'au moins l'une des une ou plusieurs premières protubérances (204) et des une ou plusieurs secondes protubérances (208) vienne en butée avec le panneau (104) pour empêcher le détachement de l'élément de recouvrement (102) vis-à-vis du panneau (104) pendant un événement de collision/d'impact du véhicule, **caractérisé en ce que**
chacune des une ou plusieurs fentes (108) du panneau (104) est une fente en forme de croix.

2. Ensemble de recouvrement (100) tel que revendiqué selon la revendication 1, dans lequel les une ou plusieurs premières protubérances (204) comprennent une paire de premières protubérances (204-1, 204-2) étendues à l'opposé l'une de l'autre, dans lequel les une ou plusieurs secondes protubérances (208) comprennent une paire de secondes protubérances (208) étendues dans une même direction et espacées l'une de l'autre, et dans lequel le panneau (104) est un tableau de bord ou une console du véhicule.

3. Ensemble de recouvrement (100) tel que revendiqué selon la revendication 1, dans lequel le panneau (104) comprend une partie chanfreinée (214) en direction d'une partie avant de chaque fente (108) de telle sorte que la partie avant de la fente (108) soit inclinée selon la partie adjacente de la fente (108).

4. Ensemble de recouvrement (100) tel que revendiqué selon la revendication 1, dans lequel chaque fente (108) du panneau (104) comprend une région d'insertion (210) présentant une largeur qui est telle que la pièce de liaison de connexion (202) ainsi que les une ou plusieurs premières protubérances (204) sont reçues au travers de la région d'insertion (210) ; et dans lequel chaque fente (108) du panneau (104) comprend une ou plusieurs régions de maintien (212), chacune des une ou plusieurs régions de maintien (212) présentant une largeur qui est telle qu'au moins l'une des une ou plusieurs premières protubérances (204) et des une ou plusieurs secondes protubérances (208) vient en butée avec le panneau (104) dans une partie correspondante adjacente à la région de maintien (212) dans l'éventualité d'une collision/d'un impact du véhicule afin d'empêcher le détachement de l'élément de recouvrement (102) vis-à-vis du panneau (104).
